# EUROPEAN PATENT APPLICATION

(11) **EP 4 685 675 A1**
(43) Date of publication of application: **28.01.2026**
(21) Application number: 23928602.4
(22) Date of filing: 22.03.2023
(51) Int. Cl.: G06F 21/32, G06F 21/60

(54) **TERMINAL, SYSTEM, METHOD FOR CONTROLLING TERMINAL, AND STORAGE MEDIUM**

(71) Applicant: NEC CORPORATION, Minato-ku, Tokyo 108-8001 (JP)
(72) Inventor: WANG, Ying, Tokyo 108-8001 (JP); HIGUCHI, Yuya, Tokyo 108-8001 (JP); IIDA, Hiroaki, Tokyo 108-8001 (JP); YOKOTA, Haruki, Tokyo 108-8001 (JP); IWAHORI, Yasufumi, Tokyo 108-8001 (JP); HOSAKA, Yoshifumi, Tokyo 108-8001 (JP); SAWADA, Megumi, Tokyo 108-8001 (JP)
(74) Representative: Betten & Resch
(86) International application number: PCT/JP2023/011071
(87) International publication number: WO 2024/195019

(57) **Abstract**

To provide a terminal that ensures the authenticity of content provided from a digital wallet. The terminal includes an identity verification means and a storage means. The identity verification means performs identity verification of an opener of a digital wallet using biometric information acquired from an identity verification document and biometric information of the opener of the digital wallet. The storage means, in a case of successful identity verification, stores the biometric information acquired from the identity verification document or the biometric information of the opener of the digital wallet as biometric information of the holder of the digital wallet.

## Description

### [Technical Field]

The present invention relates to a terminal, a system, a control method of a terminal, and a storage medium.

### [Background Art]

There exists a technology related to digital wallets.

For example, Patent Literature 1 describes that a device and method for using biometric technology are disclosed to ensure secure transactions using blockchain technology. In addition, Patent Literature 1 describes that at least some security-related issues in conventional blockchain digital wallets, specifically in blockchain digital wallets that are unable to securely authenticate user identification information, are mitigated. Furthermore, Patent Literature 1 describes that a method and apparatus for using authentication and data protection to implement a blockchain offline wallet using biometric information are presented.

### [Citation List]

### [Patent Literature]

[PTL 1] Japanese Unexamined Patent Application Publication (Translation of PCT Application) No. JP2022-508773

### [Summary of Invention]

### [Technical Problem]

In a case where a user uses a digital wallet, digital content (for example, a certificate such as a student ID) stored in the digital wallet is presented to a verifier of the certificate. In that case, the verifier confirms the authenticity of the presented digital content. That is, the verifier confirms that the user in front and the holder of the digital wallet are the same person.

In the technique disclosed in Patent Literature 1, verification of the above-described user and the holder is performed using biometric authentication. That is, in Patent Literature 1, in a case where the user utilizes a digital wallet, confirmation is performed using biometric authentication that the service user and the holder of the digital wallet are the same person.

However, in a case where the biometric information used for biometric authentication at the time the user uses the digital wallet is not the biometric information of the holder of the digital wallet, a verifier may provide a service to a user who is different from the holder of the digital wallet. That is, in a case where another person fraudulently registers biometric information by impersonating the holder at the time of opening the digital wallet, the verifier cannot confirm the authenticity of digital content (for example, a certificate such as a student ID) that is provided.

It is a main object of the present invention to provide a terminal, a system, a control method of the terminal, and a storage medium that contribute to ensuring the authenticity of content provided from a digital wallet.

### [Solution to Problem]

According to a first aspect of the present invention, there is provided a terminal including: an identity verification means that performs identity verification of an opener of a digital wallet using biometric information acquired from an identity verification document and biometric information of the opener of the digital wallet; and a storage means that stores, in a case of successful identity verification, the biometric information acquired from the identity verification document or the biometric information of the opener of the digital wallet as biometric information of the holder of the digital wallet.

According to a second aspect of the present invention, there is provided a system including: a terminal; and a business operator terminal used in a case where a service provider provides a service to a user, and wherein the terminal includes: an identity verification means that performs identity verification of an opener of a digital wallet using biometric information acquired from an identity verification document and biometric information of the opener of the digital wallet; a storage means that stores, in a case of successful identity verification, the biometric information acquired from the identity verification document or the biometric information of the opener of the digital wallet as biometric information of the holder of the digital wallet; and a usage control means that provides digital content stored in the digital wallet and the biometric information of the holder of the digital wallet to the business operator terminal.

According to a third aspect of the present invention, there is provided a control method of a terminal, the control method including: performing identity verification of an opener of a digital wallet using biometric information acquired from an identity verification document and biometric information of the opener of the digital wallet; and storing, in a case of successful identity verification, the biometric information acquired from the identity verification document or the biometric information of the opener of the digital wallet as biometric information of the holder of the digital wallet.

According to a fourth aspect of the present invention, there is provided a computer-readable storage medium storing a program causing a computer mounted on a terminal to perform processing for: performing identity verification of an opener of a digital wallet using biometric information acquired from an identity verification document and biometric information of the opener of the digital wallet; and storing, in a case of successful identity verification, the biometric information acquired from the identity verification document or the biometric information of the opener of the digital wallet as biometric information of the holder of the digital wallet.

### [Advantageous Effects of Invention]

According to the individual aspects of the present invention, there is provided a terminal, a system, a control method of the terminal, and a storage medium that contribute to ensuring the authenticity of content provided from a digital wallet. It should be noted that the advantageous effect of the present invention is not limited to the above advantageous effect. The present invention may provide other advantageous effects, instead of or in addition to the above advantageous effect.

### [Brief Description of the Drawings]

[Fig. 1] Fig. 1 is a diagram illustrating an outline of an example embodiment.
[Fig. 2] Fig. 2 is a flowchart illustrating an operation of an example embodiment.
[Fig. 3] Fig. 3 is a diagram illustrating an example of a schematic configuration of an information processing system according to a first example embodiment.
[Fig. 4] Fig. 4 is a diagram illustrating an example of a display of a terminal according to the first example embodiment.
[Fig. 5] Fig. 5 is a diagram illustrating an operation of the information processing system according to the first example embodiment.
[Fig. 6] Fig. 6 is a diagram illustrating an operation of the information processing system according to the first example embodiment.
[Fig. 7] Fig. 7 is a diagram illustrating an example of a processing configuration of the terminal according to the first example embodiment.
[Fig. 8] Fig. 8 is a diagram illustrating an example of a processing configuration of a digital wallet control unit according to the first example embodiment.
[Fig. 9] Fig. 9 is a flowchart illustrating an example of an operation of an identity verification unit according to the first example embodiment.
[Fig. 10] Fig. 10 is a diagram illustrating an example of a display of the terminal according to the first example embodiment.
[Fig. 11] Fig. 11 is a flowchart illustrating an example of an operation of a certificate acquisition control unit according to the first example embodiment.
[Fig. 12] Fig. 12 is a diagram illustrating an example of a processing configuration of a server apparatus according to the first example embodiment.
[Fig. 13] Fig. 13 is a diagram illustrating an example of a processing configuration of a business operator terminal according to the first example embodiment.
[Fig. 14] Fig. 14 is a sequence diagram illustrating an example of an operation of the information processing system according to the first example embodiment.
[Fig. 15] Fig. 15 is a diagram illustrating an operation of an information processing system according to a variation of the first example embodiment.
[Fig. 16] Fig. 16 is a diagram illustrating an example of a hardware configuration of the terminal according to the present application disclosed.
[Fig. 17] Fig. 17 is a diagram illustrating an example of a display of the terminal according to the variation of the present application disclosed.

### [Example Embodiment]

First, an outline of an example embodiment will be described. In the following outline, various components are denoted by reference characters for the sake of convenience. That is, the following reference characters are used as examples to facilitate the understanding of the present invention. Thus, the description of the outline is not intended to impose any limitations. In addition, unless otherwise specified, an individual block illustrated in the drawings represents a configuration of a functional unit, not a hardware unit. An individual connection line between blocks in the drawings signifies both one-way and two-way directions. An arrow schematically illustrates a principal signal (data) flow and does not exclude bidirectionality. In the present description and drawings, elements that can be described in a like way will be denoted by a like reference character, and redundant description thereof will be omitted as needed.

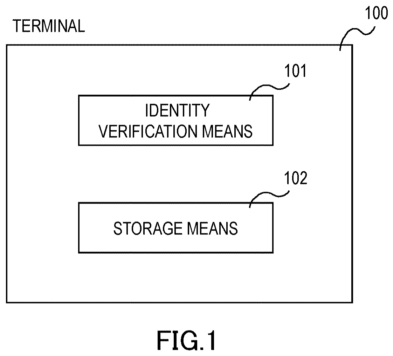

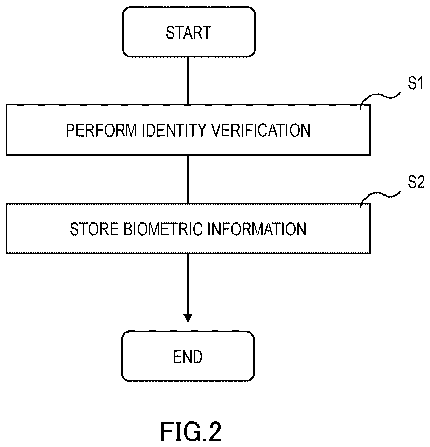

A terminal 100 according to an example embodiment includes an identity verification means 101 and a storage means 102 (see Fig. 1). The identity verification means 101 performs identity verification of an opener of a digital wallet using biometric information acquired from an identity verification document and biometric information of the opener of the digital wallet (step S1 in Fig. 2). The storage means 102, in a case of successful identity verification, stores the biometric information acquired from the identity verification document or the biometric information of the opener of the digital wallet as biometric information of the holder of the digital wallet (step S2).

The terminal 100 performs identity verification of the digital wallet opener using an identity verification document issued by a public institution at the time of opening the digital wallet. The terminal 100, in a case of successful identity verification, stores biometric information acquired at the time of opening the digital wallet as biometric information of the holder of the digital wallet. In a case where the user receives a service from a service provider, a terminal 30 is able to provide the biometric information of the holder of the digital wallet to the service provider together with digital content. The service provider, by executing an authentication process using the biometric information acquired from the terminal 30 and the biometric information of the user who desires to receive the service, can verify whether or not the user in front is the same person as the holder of the digital wallet that provides the certificate. As a result, even in a case where a person who is not the holder of the digital wallet attempts to receive a service from the service provider using the terminal 30 of the holder of the digital wallet, the service provider can detect such fraudulent behavior. That is, the authenticity of content provided from the digital wallet is ensured.

Hereinafter, specific example embodiments will be described in more detail with reference to the drawings.

### [First Example Embodiment]

A first example embodiment will be described in more detail with reference to drawings.

### [System Configuration]

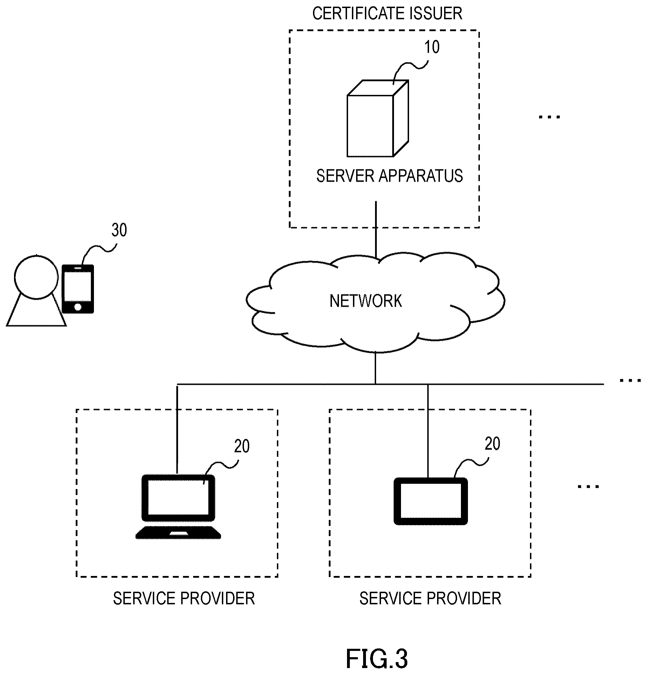

As shown in Fig. 3, the information processing system according to the first example embodiment includes at least one or more certificate issuers and at least one or more service providers.

The certificate issuer is an entity that issues a certificate to a user. For example, educational institutions such as universities or vocational schools that issue student IDs correspond to certificate issuers. Alternatively, institutions or associations that issue certificates for language proficiency or the like correspond to certificate issuers. In addition, certificate issuers are not limited to private companies, and public institutions that issue driver's licenses or the like are also included as certificate issuers in the present application disclosed.

Each certificate issuer includes a server apparatus 10. The server apparatus 10 is a server that performs processing and operations necessary to execute business operations of the certificate issuer. The server apparatus 10 may be managed and operated by the certificate issuer, or the management and operation may be entrusted to another business operator or the like. The server apparatus 10 may be installed in a building of the certificate issuer or may be installed on a network (in a cloud).

The certificate issuer issues a certificate in accordance with a request from a user. For example, a university issues a student ID (digital student ID) in accordance with a request from an enrolled student. Alternatively, an institution that conducts a language or the like issues a certificate of proficiency (digital certificate) indicating the language ability of the examinee.

The service provider is a business operator that provides a service to a user. For example, the service provider includes business operators that operate means of transportation such as trains, buses, or airplanes. Alternatively, business operators such as retail stores or restaurants correspond to the service provider. The service provider is not limited to private companies, and organizations such as public institutions including municipal offices, NGOs (Non-Governmental Organizations), and NPOs (Non-Profit Organizations) are also included as the service provider in the present application disclosed.

The service provider requests the user to present a certificate in accordance with the business or the like of its own company (its own organization). For example, a railway company that sells a student-discount commuter pass to a student requests the student to present a student ID. Alternatively, a retail store that sells tobacco, alcohol, or the like to a user requests the user to present a certificate capable of verifying age.

Each service provider includes a business operator terminal 20 used in providing a service to a user. The business operator terminal 20 may be a terminal such as a personal computer, a tablet-type terminal, or a POS (Point of Sale) terminal. It should be noted that the service provider may include a server for providing a service to a user (not shown in Fig. 3 or the like).

An employee or the like of the service provider operates the business operator terminal 20 to provide a service to the user. At that time, the business operator terminal 20 performs verification or the like of a certificate presented by the user. The business operator terminal 20 notifies the employee or the like of the verification result.

The user possesses a terminal 30. The user operates the terminal 30 to request issuance of a certificate from the certificate issuer. In addition, the user presents a certificate (for example, a student ID) required by the service provider using the terminal 30.

Each apparatus shown in Fig. 3 is connected to a network. Specifically, the server apparatus 10, the business operator terminal 20, and the terminal 30 are connected to the network by wired or wireless communication means.

The configuration of the information processing system shown in Fig. 3 is illustrative and is not intended to limit the configuration. For example, each certificate issuer may include a plurality of server apparatuses 10. Similarly, each service provider may include a plurality of business operator terminals 20.

### [Schematic Operation]

Next, a schematic operation of the information processing system according to the first example embodiment will be described.

### <Preparation of Digital Wallet>

The terminal 30 of the user includes a digital wallet function. A digital wallet is an electronic information storage service in which information security such as data integrity, reliability, and availability is ensured. Although it is desirable for a digital wallet to be managed in a self-sovereign manner, an entity other than the user themself may serve as the management entity.

The user installs an application for realizing a digital wallet in the terminal 30 the user possess. By opening a digital wallet in the terminal 30, the user is able to store various types of digital content in the terminal 30, including electronic money, student IDs, identity verification documents such as passports and driver's licenses, various ticket information such as airline tickets and boarding passes, and vaccination certificates.

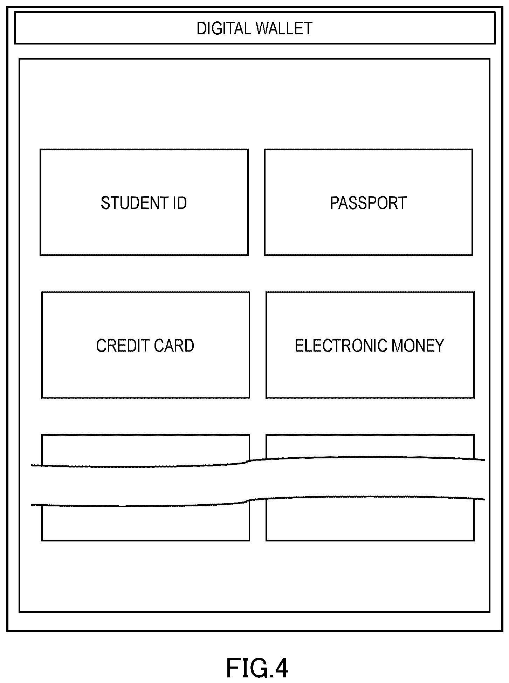

For example, the terminal 30 of the user stores digital content as shown in Fig. 4. Among the digital content stored in the terminal 30 are public identity verification documents such as a passport or a driver's license and a student ID issued by a university.

The terminal 30 performs identity verification using an identity verification document issued by a public institution such as a national administrative agency at the time of the initial activation of the digital wallet application. That is, the terminal 30 performs the identity verification of the user at the time of opening the digital wallet.

For example, the terminal 30 performs the identity verification using an identity verification document in which biometric information of the holder is described, such as a My Number Card or a passport. The terminal 30 uses a My Number Card or a passport as a root of trust.

It should be noted that examples of the biometric information include data (feature values) calculated from physical features unique to an individual, such as a face, a fingerprint, a voiceprint, a vein, a retina, or an iris pattern of an eye. Alternatively, the biometric information may be image data such as a face image or a fingerprint image. The biometric information may be anything that includes physical characteristics of the user as information. In the present application disclosed, a case in which biometric information about a "face" of a person (a face image or a feature value generated from the face image) is used will be described.

The terminal 30 acquires information related to the holder (a person to be issued) of the identity verification document from the identity verification document of the user. For example, the terminal 30 acquires information related to the holder of the My Number Card from the IC (Integrated Circuit) of the My Number Card.

Specifically, the terminal 30 acquires basic information of the holder of the My Number Card (so-called four basic items: name, gender, date of birth, address) and biometric information (a face image) of the holder. The terminal 30 stores the basic information and biometric information read from the My Number Card internally.

Further, the terminal 30 acquires biometric information of the user (the opener of the digital wallet). For example, the terminal 30 acquires a face image by capturing the user and stores the face image.

The terminal 30 performs matching processing (authentication processing) using the biometric information acquired from the identity verification document and the biometric information of the user. The terminal 30 opens a digital wallet in a case where the authentication processing (one-to-one authentication) is successful. The terminal 30 confirms, by performing matching processing (authentication processing) using biometric information, that the person to whom the identity verification document was issued and the user who uses the digital wallet of the terminal 30 are the same individual.

### <Certificate Issuance>

A user acquires digital content to be stored in a digital wallet. For example, the user operates the terminal 30 to request issuance of a certificate from a certificate issuer. For example, a student makes a request (a demand) to the university to which the student belongs for issuance of a student ID. Specifically, the digital wallet application performs an issuance request of a student ID to the university to which the student belongs.

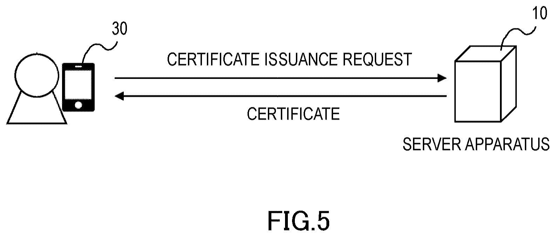

The terminal 30 transmits a "certificate issuance request" including information for identifying the user (for example, a name, a combination of a name and a date of birth, a student identification number, or the like) to the server apparatus 10 of the certificate issuer (see Fig. 5).

The certificate issuer determines whether or not the user who requests issuance of a certificate has the authority (qualification) to receive the issuance of the certificate. For example, the server apparatus 10 determines whether or not a student who desires issuance of a student ID is enrolled in its own university.

In a case where the student is affiliated with its own university, the server apparatus 10 issues a student ID (a digital student ID). The server apparatus 10 issues a certificate with a signature of its own organization (the certificate issuer, for example, a university). The server apparatus 10 transmits the issued signed certificate to the terminal 30.

The terminal 30 (the digital wallet application) verifies the signature of the received certificate.

In a case where the verification of the signature succeeds, the terminal 30 acquires basic information (name, gender, date of birth, address) from the received certificate. That is, the terminal 30 acquires the basic information related to the person to be issued of the acquired certificate. The terminal 30 performs matching between the basic information acquired from the identity verification document (the Root of Trust) at the initial launch of the digital wallet application and the basic information acquired from the certificate generated by the certificate issuer.

In the above example, the terminal 30 performs matching of basic information acquired from a My Number Card and basic information acquired from a student ID. The terminal 30 determines that the matching has succeeded in a case where the basic information acquired from the two different media matches.

In a case where the terminal 30 succeeds in verifying the signature attached to the certificate and also succeeds in matching using the two pieces of basic information (in a case where the two pieces of basic information match), the terminal 30 accepts the certificate received from the certificate issuer. The terminal 30 stores the certificate (for example, a student ID) acquired from the certificate issuer internally, and also manages the certificate so that the certificate can be used in the digital wallet.

### <Usage of Certificate>

The user presents a certificate required by the service provider to the service provider. For example, a student who intends to purchase a commuter pass presents a student ID to a railway company.

For example, the user operates the terminal 30 to activate a digital wallet application. The user selects a certificate (for example, a student ID) specified by the service provider on the digital wallet application.

The terminal 30 generates a two-dimensional barcode using a certificate selected by the user and biometric information stored internally (for example, a face image acquired from a My Number Card or a face image captured at the time of opening the digital wallet). The terminal 30 generates a two-dimensional barcode in which a certificate specified by the service provider and biometric information of the user are converted. The terminal 30 displays the generated two-dimensional barcode.

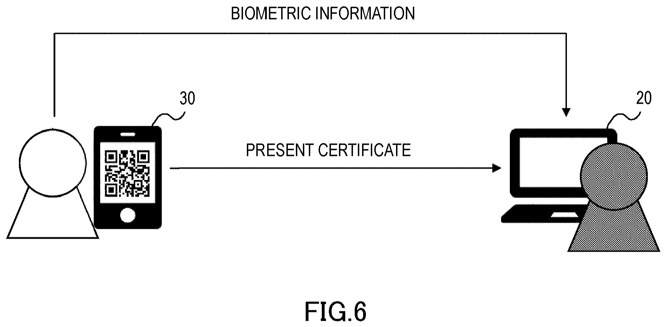

The user presents the terminal 30, on which the two-dimensional barcode is displayed, to the service provider (for example, an employee or the like of a railway company) (see Fig. 6).

The service provider (an employee or the like of the service provider) operates the business operator terminal 20 to read the two-dimensional barcode that has been presented. In addition, the service provider operates the business operator terminal 20 to acquire biometric information of the user in front (the user who presents the certificate). For example, the service provider operates the business operator terminal 20 to capture an image of the user in front and acquire a face image.

The business operator terminal 20 acquires the two-dimensional barcode (the two-dimensional barcode including a signed certificate and biometric information) and the biometric information of the user who desires to receive the service.

The business operator terminal 20 performs matching processing (authentication processing) using the biometric information obtained from the two-dimensional barcode and the biometric information of the user in front. The business operator terminal 20, in a case where the authentication processing (one-to-one authentication) is successful, treats the presented certificate as a valid certificate issued to the user in front.

The business operator terminal 20 notifies the service provider (a staff member or the like of the service provider) that the presented certificate is valid. Alternatively, the business operator terminal 20 determines, as necessary, the validity, effectiveness, or the like of the presented certificate. For example, the business operator terminal 20 performs verification of the signature attached to a student ID and verification related to the expiration date of the student ID. The business operator terminal 20 notifies the service provider of the verification result.

In a case where a certificate required for the service provider to provide a service to a user is presented, the service provider provides the service to the user. In the example above, a staff member of a railway company sells a discounted commuter pass to a student.

As described above, at the time of opening a digital wallet, the terminal 30 performs identity verification using biometric information obtained from an identity verification document of the wallet opener and biometric information of the wallet opener. In a case where the identity verification is successful, the terminal 30 enables the use of the digital wallet. In addition, the terminal 30 stores a certificate in the digital wallet, the certificate being authenticated by the certificate issuer using a digital signature or the like. At that time, the terminal 30 (the digital wallet application) performs matching between basic information extracted from the identity verification document and basic information obtained from the certificate issuer. The terminal 30 verifies the authenticity of the certificate acquired by the matching. Furthermore, in a case where the user uses a certificate stored in the digital wallet, the terminal 30 provides the certificate and biometric information of the holder of the digital wallet to a service provider (a verifier). The service provider performs authentication using biometric information of the holder of the digital wallet and biometric information obtained from the user in front, thereby verifying that the user in front is the holder of the digital wallet. In a case where the digital wallet used by the user is a highly trusted digital wallet, the service provider can trust the certificate obtained from the digital wallet.

Next, details of the individual apparatuses included in the information processing system according to the first example embodiment will be described.

### [Terminal]

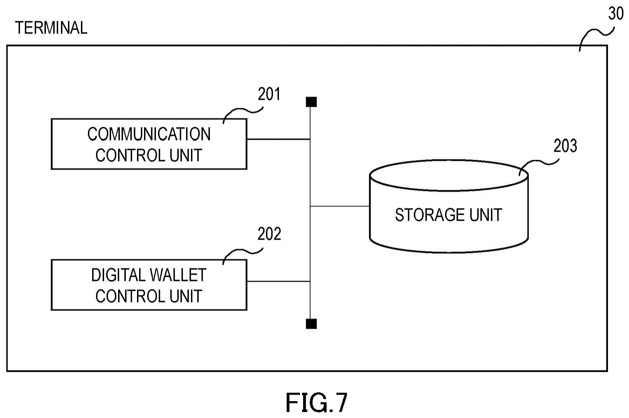

Fig. 7 is a diagram illustrating an example of a processing configuration (processing modules) of the terminal 30 according to the first example embodiment. Referring to Fig. 7, the terminal 30 includes a communication control unit 201, a digital wallet control unit 202, and a storage unit 203.

The communication control unit 201 is means for controlling communication with other apparatuses. For example, the communication control unit 201 receives data (packets) from the server apparatus 10. In addition, the communication control unit 201 transmits data to the server apparatus 10. The communication control unit 201 gives data received from other apparatuses to other processing modules. The communication control unit 201 transmits data acquired from other processing modules to other apparatuses. In this way, other processing modules transmit and receive data to and from other apparatuses via the communication control unit 201. The communication control unit 201 includes a function as a receiving unit that receives data from other apparatuses and a function as a transmitting unit that transmits data to other apparatuses.

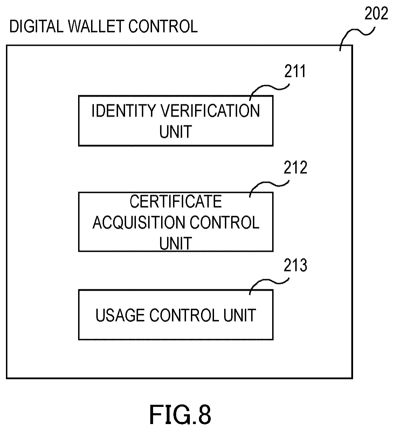

The digital wallet control unit 202 is means for performing management and control related to the digital wallet. As shown in Fig. 8, the digital wallet control unit 202 includes submodules including a identity verification unit 211, a certificate acquisition control unit 212, and a usage control unit 213.

It should be noted that a detailed description regarding the installation of the digital wallet application will be omitted. This is because the installation of the digital wallet application is obvious to those skilled in the art.

The identity verification unit 211 is means for performing identity verification of an opener of a digital wallet. The identity verification unit 211 performs identity verification of the opener of the digital wallet, using biometric information obtained from an identity verification document and biometric information of the opener of the digital wallet. More specifically, the identity verification unit 211 confirms that the person who has opened the digital wallet and the holder (the person to be issued) of the identity verification document issued by a public institution are the same individual.

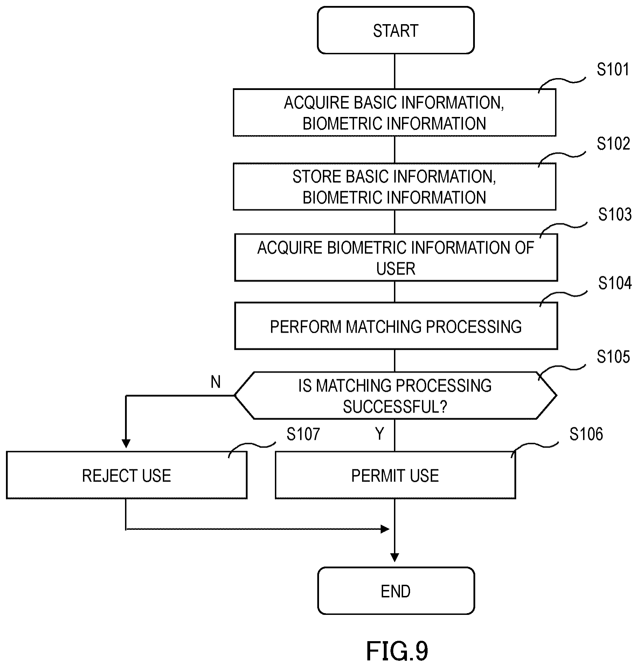

Fig. 9 is a flowchart illustrating an example of the operation of the identity verification unit 211 according to the first example embodiment. With reference to Fig. 9, the operation of the identity verification unit 211 according to the first example embodiment will be described.

The identity verification unit 211, at the time of opening a digital wallet (at the time of the initial activation), acquires information related to the holder of an identity verification document from the identity verification document possessed by the user. For example, the identity verification unit 211 acquires basic information and biometric information of the holder of the identity verification document from an IC (Integrated Circuit) chip mounted in a My Number Card or a passport (step S101).

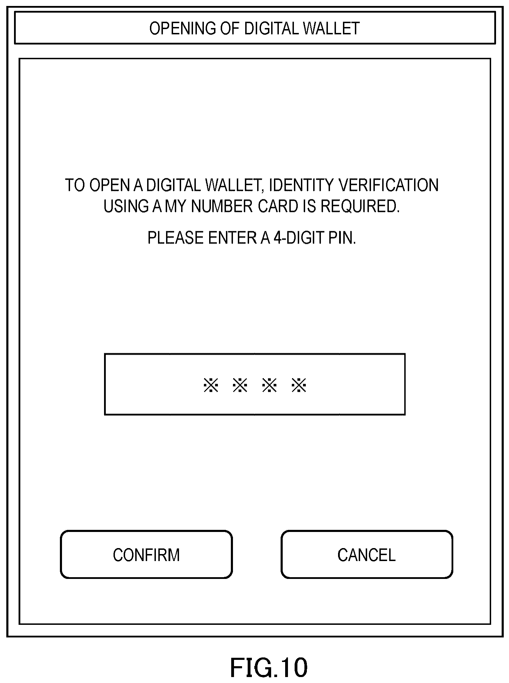

For example, in a case where a My Number Card is used as an identity verification document, the identity verification unit 211 acquires a PIN for a Digital Certificate for User Identification using a GUI (Graphical User Interface) or the like (see Fig. 10). Alternatively, in a case where a passport is used as an identity verification document, the identity verification unit 211 acquires information described in the MRZ (Machine Readable Zone) printed on the surface of the passport using OCR (Optical Character Recognition) technology.

The identity verification unit 211 reads information from the IC chip using the acquired PIN (a four-digit number) or the information described in the MRZ as a password. The identity verification unit 211 stores, in the storage unit 203, basic information (name, gender, date of birth, address) and biometric information (face information, face image) related to the holder of the identity verification document, which have been read from the identity verification document (the My Number Card, the passport, or the like) (step S102).

Further, the identity verification unit 211 acquires biometric information of the user (a user of the terminal 30; the opener of the digital wallet) (step S103). For example, the identity verification unit 211 prompts the user to photograph their own face using a GUI or the like (that is, acquires a face image by so-called selfie photography).

The identity verification unit 211, after acquiring biometric information from the identity verification document and biometric information of the user operating the own apparatus, performs matching processing using the biometric information obtained from the identity verification document and the biometric information of the user (step S104). The identity verification unit 211 determines whether or not the two pieces of biometric information substantially match.

Specifically, the identity verification unit 211 generates a feature value from each of the two pieces of biometric information (for example, face images).

It should be noted that since an existing technology can be used to generate the feature value, a detailed description thereof will be omitted. For example, the identity verification unit 211 extracts eyes, nose, mouth, or the like as feature points from a face image. Subsequently, the identity verification unit 211 calculates the location of individual feature point and the distance between individual feature points as a feature value (generate a feature vector consisting of a plurality of feature values).

Next, the identity verification unit 211 performs matching processing (authentication processing) using the two generated feature values. Specifically, the identity verification unit 211 calculates the similarity between the corresponding face images using the two feature values. The identity verification unit 211 determines whether or not the two images are face images of the same person, based on the result of threshold processing applied to the calculated similarity. It should be noted that the chi-squared distance, the Euclidean distance, or the like can be used for the individual similarity. A greater distance represents a lower similarity, and a shorter distance represents a higher similarity.

In a case where the similarity is greater than a predetermined value (the distance is shorter than a predetermined value), the identity verification unit 211 determines that the matching processing is successful. In a case where the similarity is equal to or less than the predetermined value, the identity verification unit 211 determines that the matching processing has failed.

In a case where the matching processing is successful (step S105, Yes branch), the identity verification unit 211 permits the user to use the digital wallet (usage permission; step S106). That is, in a case where the identity verification unit 211 succeeds in authentication processing (1-to-1 authentication), it opens the digital wallet.

In a case where the identity verification unit 211 succeeds in matching processing (authentication processing) using biometric information, the identity verification unit 211 treats the holder of the identity verification document and the user of the terminal 30 as the same person. At the time of the initial startup of the digital wallet, it is determined whether or not the holder of the identity verification document and the user of the terminal 30 are the same person. In a case where the holder of the identity verification document and the opener of the digital wallet are the same person, the terminal 30 enables the use of the digital wallet application.

In a case where the matching processing fails (step S105, No branch), the identity verification unit 211 does not permit the user to use the digital wallet (usage denial; step S107). That is, in a case where the authentication processing (one-to-one authentication) fails, the user is not able to use the digital wallet (the digital wallet cannot be opened).

As described above, the identity verification unit 211 determines that the identity verification is successful in a case where the first authentication processing using the biometric information acquired from the identity verification document and the biometric information of the opener of the digital wallet is successful. In a case where the identity verification is successful, the digital wallet is opened.

It should be noted that the basic information extracted from the identity verification document is not changed in principle. In order to change the basic information, matching processing between the changed basic information and the basic information obtained from the identity verification document such as the My Number Card is required.

The certificate acquisition control unit 212 is means for performing control related to the acquisition of a certificate.

The certificate acquisition control unit 212 receives a certificate from a certificate issuer by requesting the issuance of the certificate to the certificate issuer. The certificate acquisition control unit 212 performs matching processing using the basic information, the basic information being acquired from the identity verification document, related to the holder of the identity verification document and the basic information, the basic information being acquired from the received certificate, related to the holder of the certificate. In a case where the two pieces of basic information match, the certificate acquisition control unit 212 stores the certificate received from the certificate issuer in the digital wallet.

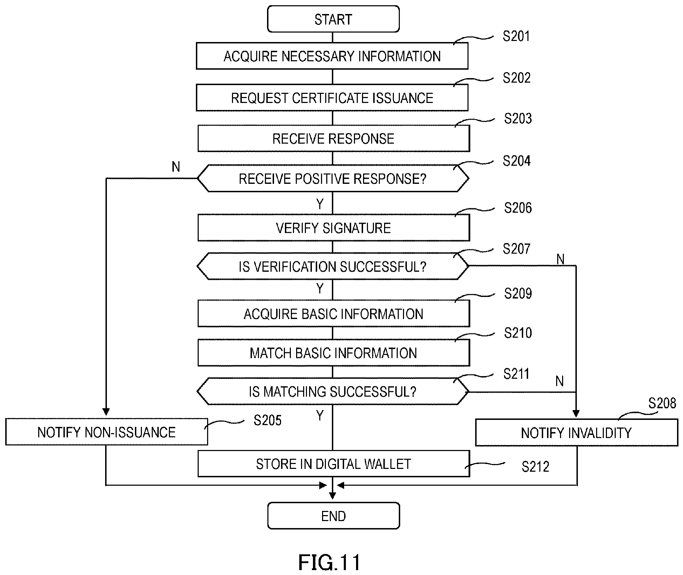

Fig. 11 is a flowchart illustrating an example of the operation of the certificate acquisition control unit 212 according to the first example embodiment. The operation of the certificate acquisition control unit 212 according to the first example embodiment will be described with reference to Fig. 11.

In a case where a user who has opened a digital wallet activates the digital wallet application and performs a predetermined operation (for example, pressing a certificate issuance button), the certificate acquisition control unit 212 performs control related to the acquisition of a certificate desired by the user.

First, the certificate acquisition control unit 212 acquires information necessary for requesting certificate issuance using a GUI or the like (acquisition of necessary information; step S201). Specifically, the certificate acquisition control unit 212 acquires information of a certificate issuer corresponding to the certificate that the user desires to be issued, the type of certificate desired, and the like. Alternatively, the certificate acquisition control unit 212 acquires information for identifying the user by the certificate issuer, if necessary (for example, a student ID number in a case of requesting issuance of a student ID).

The certificate acquisition control unit 212 notifies the certificate issuer of the acquired necessary information. For example, the certificate acquisition control unit 212 notifies the certificate issuer of the type of certificate that the user desires to be issued and information for identifying the user (for example, a name or a student ID number). Specifically, the certificate acquisition control unit 212 transmits a "certificate issuance request" including the type of certificate, the information for identifying the user, and the like to the server apparatus 10 of the specified certificate issuer (step S202).

The certificate acquisition control unit 212 receives a response (positive response, negative response) to the certificate issuance request from the server apparatus 10 (step S203).

In a case where a negative response (certificate not issued) is received (step S204, No branch), the certificate acquisition control unit 212 notifies the user that the certificate has not been issued (notification of non-issuance; step S205).

In a case where a positive response (certificate issued) is received (step S204, Yes branch), the certificate acquisition control unit 212 verifies a signature of the certificate included in the positive response (step S206). The certificate acquisition control unit 212 verifies the signature by using the digital signature attached to the certificate and a public key acquired from an electronic certificate corresponding to the digital signature.

In a case where verification of the signature fails (step S207, No branch), the certificate acquisition control unit 212 discards the certificate received from the certificate issuer. In addition, the certificate acquisition control unit 212 notifies the user that the certificate acquired from the certificate issuer is invalid (notification of invalidity; step S208).

In a case where verification of the signature succeeds (step S207, Yes branch), the certificate acquisition control unit 212 acquires basic information (name, gender, date of birth, address) of a holder (a person to be issued) of the certificate from the received certificate (acquisition of basic information; step S209).

The certificate acquisition control unit 212 performs matching between basic information related to the holder of the acquired certificate and basic information acquired from the identity verification document at the initial activation of the digital wallet (step S210). That is, the certificate acquisition control unit 212 performs matching between the basic information of the certificate holder and the basic information of the holder of the digital wallet (the digital wallet opener).

In a case where the two pieces of basic information match (in the case where each of the name, gender, date of birth, and address, which constitute the basic information, matches), the certificate acquisition control unit 212 determines that the matching of the basic information has succeeded. In a case where the two pieces of basic information do not match, the certificate acquisition control unit 212 determines that the matching of the basic information has failed.

In a case where the matching of the basic information fails (step S211, No branch), the certificate acquisition control unit 212 discards the certificate received from the certificate issuer. In addition, the certificate acquisition control unit 212 notifies the user that the certificate acquired from the certificate issuer is invalid (step S208).

In a case where the matching of the basic information succeeds (step S211, Yes branch), the certificate acquisition control unit 212 stores the certificate received from the certificate issuer in the digital wallet (step S212).

As described above, the certificate acquisition control unit 212 determines that the certificate received from the certificate issuer is a legitimate certificate in a case where the verification of the signature attached to the certificate succeeds and the matching using the two pieces of basic information also succeeds (the two pieces of basic information match). The certificate acquisition control unit 212 stores the legitimate certificate (for example, a student ID) acquired from the certificate issuer in the storage unit 203.

The usage control unit 213 is means for performing control related to the use of digital content (for example, a digital certificate) stored in the digital wallet.

The usage control unit 213 acquires a certificate that the user wishes to use by using a GUI or the like. For example, the usage control unit 213 displays a list of digital content as shown in Fig. 4 and enables the user to select a certificate to be used.

In a case where the user selects a certificate (for example, a student ID), the usage control unit 213 generates a two-dimensional barcode by using the selected certificate and biometric information stored in the storage unit 203 (biometric information acquired from an identity verification document or biometric information acquired from the user). The usage control unit 213 displays the generated two-dimensional barcode.

As described above, the usage control unit 213 provides a certificate stored in the digital wallet and biometric information of the holder of the digital wallet to a service provider in a case where the user receives a service from the service provider.

The storage unit 203 is means for storing information necessary for the operation of the terminal 30. In a case where the identity verification unit 211 succeeds in identity verification of the holder of the digital wallet, the storage unit 203 stores biometric information acquired from an identity verification document or biometric information of the holder of the digital wallet as biometric information of the holder of the digital wallet. It should be noted that the biometric information stored as biometric information of the holder of the digital wallet may be biometric information acquired from an identity verification document or may be biometric information acquired by capturing an image of the user.

### [Server Apparatus]

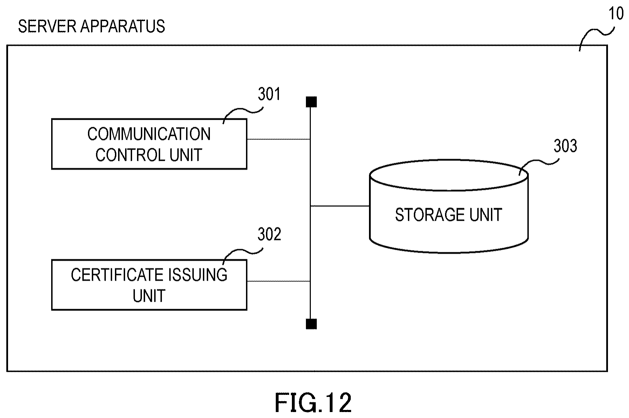

Fig. 12 is a diagram illustrating an example of a processing configuration (processing modules) of the server apparatus 10 according to the first example embodiment. Referring to Fig. 12, the server apparatus 10 includes a communication control unit 301, a certificate issuing unit 302, and a storage unit 303.

The communication control unit 301 is means for controlling communication with other apparatuses. For example, the communication control unit 301 receives data (packets) from the terminal 30. In addition, the communication control unit 301 transmits data to the terminal 30. The communication control unit 301 gives data received from other apparatuses to other processing modules. The communication control unit 301 transmits data acquired from other processing modules to other apparatuses. In this way, other processing modules transmit and receive data to and from other apparatuses via the communication control unit 301. The communication control unit 301 includes a function as a receiving unit that receives data from other apparatuses and a function as a transmitting unit that transmits data to other apparatuses.

The certificate issuing unit 302 is means for issuing a certificate to a user. The certificate issuing unit 302 processes a "certificate issuance request" received from the terminal 30.

Upon receiving a certificate issuance request, the certificate issuing unit 302 searches a database (not shown in Fig. 12 or the like) that stores user information, using information included in the certificate issuance request for identifying a user (for example, a name or student ID number) as a key.

In a case where the above search fails (In a case where a corresponding user is not registered in the database), the certificate issuing unit 302 transmits a negative response indicating certificate issuance failure to the terminal 30.

The certificate issuing unit 302, in a case where the above search succeeds, determines whether or not issuance of a certificate to the user is possible, based on the information stored in the database and the type of certificate that the user included in the certificate issuance request wishes to be issued. That is, the certificate issuing unit 302 determines whether or not the user who wishes to be issued the certificate has authority (eligibility) to receive the certificate issuance.

For example, in a case where issuance of a student ID is requested and the user who requests issuance of the student ID has not withdrawn from the school or the like, the certificate issuing unit 302 determines that the student has the authority to receive issuance of the certificate. In contrast, in a case where the student (a former student) recorded in the database has withdrawn from the school, the certificate issuing unit 302 determines that the student does not have the authority to receive issuance of the certificate.

It should be noted that a more detailed description related to the issuance of individual certificates (for example, a student ID or a language proficiency certificate or the like) will be omitted. This is because the detailed description related to the issuance of individual certificates is different from the purpose of the present application disclosed.

In a case where the user does not have authority to receive issuance of the certificate, the certificate issuing unit 302 transmits a negative response indicating certificate issuance failure (certificate issuance not allowed) to the terminal 30.

In a case where the user has authority to receive issuance of the certificate, the certificate issuing unit 302 generates a certificate (a digital certificate; for example, a digital student ID) to be issued to the user. The certificate issuing unit 302 generates a certificate to which an electronic signature of its own organization (for example, a university) and a corresponding electronic certificate are attached.

It should be noted that the certificate issuing unit 302 generates a certificate including basic information of a user (a person to be issued) who is to receive the certificate. For example, the certificate issuing unit 302 generates a student ID including a student's name, gender, date of birth, and address.

The certificate issuing unit 302 transmits a generated certificate (a certificate including an electronic document, an electronic signature, and an electronic certificate) to the terminal 30. The certificate issuing unit 302 transmits a positive response indicating successful issuance of the requested certificate (a positive response including a signed certificate) to the terminal 30.

The storage unit 303 is means for storing information necessary for operation of the server apparatus 10.

### [Business operator terminal]

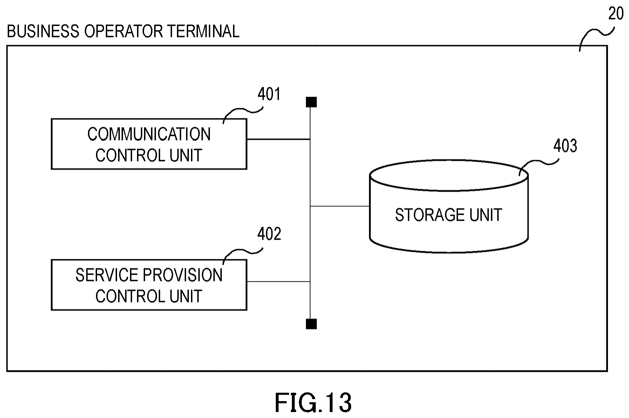

Fig. 13 is a diagram illustrating an example of a processing configuration (processing module) of a business operator terminal 20 according to the first example embodiment. Referring to Fig. 13, the business operator terminal 20 includes a communication control unit 401, a service provision control unit 402, and a storage unit 403.

The communication control unit 401 is means for controlling communication with other apparatuses. For example, the communication control unit 401 receives data (packets) from a server (not shown in Fig. 3 or the like) of a service provider. In addition, the communication control unit 401 transmits data to the server. The communication control unit 401 gives data received from other apparatuses to other processing modules. The communication control unit 401 transmits data acquired from other processing modules to other apparatuses. In this way, other processing modules transmit and receive data to and from other apparatuses via the communication control unit 401. The communication control unit 401 includes a function as a receiving unit for receiving data from other apparatuses, and a function as a transmitting unit for transmitting data to other apparatuses.

The service provision control unit 402 is means for performing control related to a service provided to a user.

The service provision control unit 402 controls a two-dimensional barcode reader or the like in accordance with an operation by an employee or the like of a service provider, and reads a two-dimensional barcode presented by a user (a user who receives the service). The service provision control unit 402 decodes the two-dimensional barcode and acquires a signed certificate and biometric information (biometric information of the holder of the digital wallet).

In addition, the service provision control unit 402 acquires biometric information (for example, a face image) of the user in front (the user who receives the service), in accordance with an operation by an employee or the like of the service provider.

The service provision control unit 402 determines, using the two acquired pieces of biometric information, whether or not the certificate presented to the service provider is a valid certificate.

Specifically, the service provision control unit 402 performs matching processing (authentication processing) between the biometric information (for example, a face image) acquired from the two-dimensional barcode and the biometric information (for example, a face image acquired by capturing the user in front) of the user in front.

The service provision control unit 402 determines that, in a case where the two pieces of biometric information are substantially identical (in a case where the matching processing is successful), the certificate presented to the service provider is a valid certificate issued to the user in front.

The service provision control unit 402 determines that, in a case where the two pieces of biometric information are not substantially identical (in a case where the matching processing fails), the certificate presented to the service provider is not a valid certificate issued to the user in front.

In a case where the certificate is not valid, the service provision control unit 402 notifies an employee or the like of the service provider of that fact. For example, the service provision control unit 402 displays a message indicating that fact on a liquid crystal monitor or outputs the message from a speaker.

In a case where the certificate is valid, the service provision control unit 402 notifies the service provider (a staff member or the like of the service provider) that the presented certificate is valid. Alternatively, the service provision control unit 402 determines, if necessary, the validity, effectiveness, or the like of the presented certificate. For example, the service provision control unit 402 performs verification of a signature attached to a student ID and verification related to the expiration date of the student ID.

It should be noted that, with respect to individual service provision, a detailed description related to required certificates and verification of the certificates will be omitted. This is because a detailed description related to verification of the certificate or the like is different from the purpose of the present application disclosed.

The storage unit 403 is means for storing information necessary for the operation of the business operator terminal 20.

### [System Operation]

Subsequently, the operation of the information processing system according to the first example embodiment will be described.

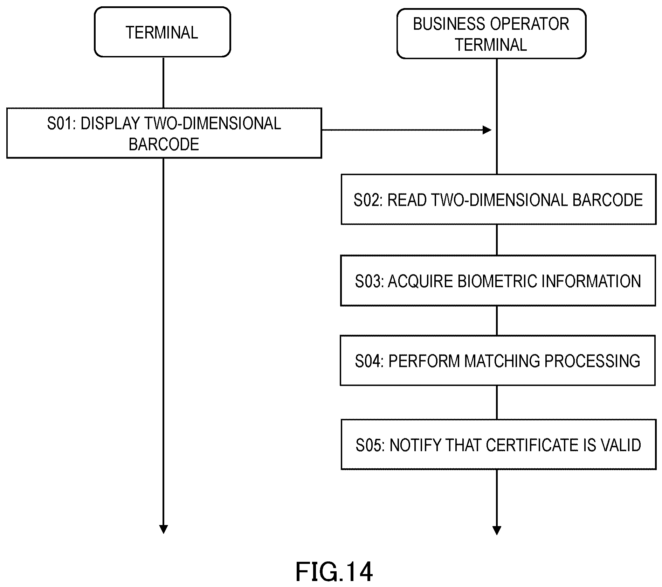

Fig. 14 is a sequence diagram illustrating an example of the operation of the information processing system according to the first example embodiment. With reference to Fig. 14, the operation of the information processing system according to the first example embodiment will be described. It should be noted that a description of the operation of the information processing system related to identity verification or certificate issuance at the time of opening a digital wallet will be omitted.

The terminal 30 displays a two-dimensional barcode in which a certificate selected by the user and biometric information are converted, in accordance with an operation of the user (step S01).

The business operator terminal 20 reads the two-dimensional barcode in accordance with an operation of an employee or the like of the service provider (step S02).

In addition, the business operator terminal 20 acquires biometric information from the user in front in accordance with an operation of an employee or the like of the business operator terminal 20 (step S03). For example, the business operator terminal 20 captures an image of the user in front and acquires a face image.

The business operator terminal 20 performs matching processing using biometric information obtained from the two-dimensional barcode and biometric information of the user in front (step S04).

In a case where the matching processing is successful, the business operator terminal 20 notifies an employee or the like of the service provider that the certificate presented by the user is a valid certificate (step S05). The employee or the like of the service provider who receives the notification provides the service to the user.

Next, variations according to the first example embodiment will be described.

### <Variation 1>

In the above example embodiment, a case has been described in which a two-dimensional barcode is generated using a certificate and biometric information stored in a digital wallet, the two-dimensional barcode is provided to a service provider, and identity verification is performed. Here, with respect to the biometric information, a certificate may also be issued by a certificate issuer. Specifically, a user requests a certificate issuer to issue a certificate for biometric information, and stores the issued certificate in a digital wallet. The user provides the certificate for the biometric information to the service provider at the time of receiving a service. The service provider may perform identity verification using the provided certificate. For example, a certificate for a face, that is, a face VC, is issued as a Verifiable Credential (VC) by a certificate issuer. Specifically, the user provides face information to the issuer and requests issuance of the face VC. The issuer matches the presented face with face information in its possession and issues the face VC in a case where the two match. The user provides the issued face VC to the service provider, and the service provider performs identity verification using the face VC.

### <Issuance of Certificate>

A user acquires digital content to be stored in a digital wallet. For example, the user operates the terminal 30 to request a certificate issuer to issue a certificate. For example, a student requests (demands) the issuance of a student ID and a face VC to the university to which the student belongs. Specifically, a digital wallet application makes a request for issuance of a student ID and a face VC to the university to which the student belongs. It should be noted that an external business operator entrusted by the university may issue the face VC.

The terminal 30 transmits a "certificate issuance request" including information for identifying a user (for example, a name, a combination of a name and a date of birth, a student ID number, or the like) and biometric information to the server apparatus 10 of a certificate issuer.

The certificate issuer determines whether or not a user who requests issuance of a certificate has the authority (qualification) to receive the issuance of the certificate. For example, the server apparatus 10 determines whether or not a student who desires the issuance of a student ID and a face VC is enrolled in the university and whether or not the biometric information presented by the student matches biometric information held by the university.

In a case where the student belongs to the own university and a match is found through the matching of biometric information, the server apparatus 10 issues a student ID (digital student ID) and a face VC. The server apparatus 10 issues a signed certificate of its own organization (certificate issuer; for example, a university). The server apparatus 10 transmits the issued signed certificate to the terminal 30.

The terminal 30 (digital wallet application) verifies the signature of the received certificate.

In a case where the verification of the signature is successful, the terminal 30 acquires basic information (name, gender, date of birth, address) and biometric information from the received certificate. That is, the terminal 30 acquires the basic information and the biometric information related to the person to be issued of the acquired certificate. The terminal 30 performs matching between the basic information and the biometric information acquired from an identity verification document (Root of Trust) at the initial startup of the digital wallet application, and the basic information and the biometric information acquired from the certificate generated by the certificate issuer.

In the above example, the terminal 30 performs matching between the basic information acquired from the My Number Card and the basic information acquired from the student ID. Similarly, the terminal 30 performs matching between the biometric information acquired from the My Number Card and the biometric information acquired from the face VC. The terminal 30 determines that the matching is successful in a case where the basic information and the biometric information acquired from two different media match.

In a case where the terminal 30 succeeds in the verification of the signature appended to the certificate and also succeeds in the matching using the two pieces of basic information and biometric information (in which the two pieces of basic information and biometric information match), the terminal 30 accepts the certificate received from the certificate issuer. The terminal 30 stores the certificate (for example, a student ID and a face VC) acquired from the certificate issuer internally and manages the certificate so that the certificate can be used in the digital wallet. In the above, the case where the face VC is requested and issued at the same timing as other certificates has been described. The face VC may be issued at a different timing from other certificates. The user provides the certificate issuer with a previously acquired face-attached certificate stored in the digital wallet and requests the issuance of the face VC. The certificate issuer performs matching between the face information in the certificate presented by the user and the face information held by the issuer, and in a case where they match, issues the face VC.

### <Use of Certificate>

The user presents to the service provider a certificate required by the service provider. For example, a student who attempts to purchase a commuter pass presents a student ID and a face VC to a railway company.

For example, the user operates the terminal 30 to activate a digital wallet application. The user selects, on the digital wallet application, a certificate specified by the service provider (for example, a student ID and a face VC).

The terminal 30 displays the certificate (for example, a student ID and a face VC) selected by the user.

The user presents the terminal 30 displaying the student ID and the face VC to the service provider (for example, an employee or the like of a railway company).

The service provider (an employee or the like of the service provider) operates the business operator terminal 20 to read the presented student ID and face VC. In addition, the service provider operates the business operator terminal 20 to acquire the biometric information of the user in front (the user who presents the certificate). For example, the service provider operates the business operator terminal 20 to photograph the user in front and acquires a face image.

The business operator terminal 20 acquires the face VC and the biometric information of the user who desires the provision of the service.

The business operator terminal 20 performs matching processing (authentication processing) using the biometric information acquired from the face VC and the biometric information of the user in front. In a case where the authentication processing (1-to-1 authentication) succeeds, the business operator terminal 20 treats the presented certificate as a legitimate certificate issued to the user in front.

The business operator terminal 20 notifies the service provider (an employee or the like of the service provider) that the presented certificate is legitimate. Alternatively, the business operator terminal 20 determines the legitimacy, validity, or the like of the presented certificate as necessary. For example, the business operator terminal 20 performs verification of the signature attached to the student ID and verification related to the expiration date of the student ID. The business operator terminal 20 notifies the service provider of the verification result.

In a case where a certificate necessary for the service provider to provide a service to the user is presented, the service provider provides the service to the user. In the above example, an employee of the railway company sells a discounted commuter pass for students to the student.

### <Variation 2>

The matching processing of biometric information necessary for the service provider to provide a service to the user may be performed by the terminal 30 of the user. In this case, the usage control unit 213 of the terminal 30 performs second authentication processing using the biometric information of the holder of the digital wallet and the biometric information of the user, and uses the certificate stored in the digital wallet in a case where the second authentication processing is successful.

For example, attendance confirmation for a class at a university may be performed by the terminal 30. In this case, the usage control unit 213 of the terminal 30 performs authentication processing using the biometric information of the holder of the digital wallet and the biometric information of the student in a case where the student receives a service from the university (in a case where the student attends a university class). The usage control unit 213 determines whether or not the student has the authority to attend the class by using the student ID stored in the digital wallet in a case where the authentication processing is successful.

An apparatus that transmits a beacon is installed in a university classroom. The beacon transmitting apparatus transmits a beacon including a management number corresponding to a class held in the classroom.

The terminal 30 activates the usage control unit 213 upon receiving a beacon transmitted by the beacon transmitting apparatus. The usage control unit 213 captures an image of the user (the owner of the own apparatus). The usage control unit 213 performs matching processing using the biometric information stored in the digital wallet (biometric information of the holder of the digital wallet) and the biometric information acquired by capturing the owner.

In a case where the matching processing is successful, the usage control unit 213 determines that the user operating the own apparatus is the holder of the digital wallet. In a case where the user is the holder of the digital wallet (in a case where the authenticity of the user is confirmed), the usage control unit 213 determines whether or not the user is qualified to take a class held in the classroom based on the student ID stored in the digital wallet.

The usage control unit 213 identifies the class (class name) being conducted in the classroom from the management number transmitted by the beacon transmitting apparatus and determines whether or not the student is qualified to take the class based on information such as the affiliated department described in the student ID. In a case where the student is qualified to take the class, the usage control unit 213 notifies a server managed by the university (for example, the server apparatus 10) of attendance of the class by the student. That is, in a case where the student is qualified to take the class, the usage control unit 213 notifies the university that the status of the student is "attendance of a class".

In a case where the matching processing fails, the usage control unit 213 determines that the student who is attempting to attend the class is not the owner of the terminal 30 (the holder of the digital wallet) and instructs the user to leave the classroom. In addition, in a case where the usage control unit 213 determines that the user does not have the qualification to participate in the class, it instructs the user to leave the classroom.

It should be noted that the usage control unit 213 may perform the above-described authentication processing and verification of authority related to class participation in a case where a predetermined operation of the user (for example, pressing an attendance button) is detected, without relying on the reception of a beacon. Alternatively, the terminal 30 may estimate the current location of the user using GPS (Global Positioning System). The terminal 30 may activate the usage control unit 213 in a case where it is determined that the user has entered the classroom. Thereafter, the usage control unit 213 may determine whether or not the user is qualified to take the class conducted in the classroom based on the student ID stored in the digital wallet.

Alternatively, attendance confirmation may be performed using the business operator terminal 20 prepared by the university. The business operator terminal 20, which is of a tablet type or a kiosk type and is installed at the entrance of the classroom, may perform acquisition of a certificate and matching processing using biometric information. That is, the terminal 30 transmits information related to a face image and a student ID to the business operator terminal 20 installed at the entrance of the classroom. The business operator terminal 20 may perform matching processing using a face image photographed by the user in front and the face image acquired from the terminal 30.

As described above, the usage control unit 213 performs second authentication processing in a case where a beacon is received from a beacon transmitting apparatus installed in a classroom of an educational institution. In a case where the second authentication processing succeeds, the usage control unit 213 determines whether or not the user is qualified to take the class conducted in the classroom based on the student ID stored in the digital wallet.

### <Variation 3>

A plurality of digital contents may be transmitted and received between the terminal 30 and the business operator terminal 20. For example, in a case where a user enters a facility such as a museum, a student ID indicating that the user is a student and a coupon that allows a predetermined discount may be provided to the business operator terminal 20. In this case, the terminal 30 may display a two-dimensional barcode obtained by converting the digital contents (the student ID and the coupon) designated by the user and biometric information. It should be noted that the user may designate digital contents to be presented to the service provider based on information provided by the service provider or the like. Alternatively, in a case where the user receives a predetermined service, the terminal 30 may automatically designate digital contents.

In a case where the business operator terminal 20 succeeds in matching processing using a face image obtained by capturing the user in front and a face image acquired from the terminal 30, the obtained student ID is determined to be valid. In this case, the user is able to receive a student discount. In addition, in a case where a coupon acquired from the terminal 30 is valid, the business operator terminal 20 performs a discount in accordance with the coupon (notifying a staff member or the like of the service provider that the coupon is valid).

As described above, the tablet type or kiosk type terminal installed at the entrance of a facility or the like may confirm the validity of a student ID or the like using biometric authentication. The business operator terminal 20 prevents a user other than a student from using the student discount.

### <Variation 4>

In the above example embodiment, it has been described that a certificate and biometric information are transmitted and received between the terminal 30 and the business operator terminal 20 using a two-dimensional barcode. The certificate and biometric information may be transmitted and received between the terminal 30 and the business operator terminal 20 using a short-range wireless communication means such as Bluetooth (registered trademark) or NFC (Near Field Communication). Alternatively, the certificate and biometric information may be transmitted and received between the terminal 30 and the business operator terminal 20 using a mobile communication means such as 4G (4th Generation) or 5G (5th Generation), or a wireless LAN (Local Area Network) such as Wi-Fi (Wireless Fidelity).

In this case, the usage control unit 213 of the terminal 30 transmits a certificate (a signed certificate) selected by the user and biometric information of the holder of the digital wallet to the business operator terminal 20 using a short-range wireless communication means.

Upon receiving the certificate and the biometric information, the service provision control unit 402 of the business operator terminal 20 acquires biometric information of the user in front. Thereafter, the service provision control unit 402 performs biometric authentication using the two pieces of biometric information, as described in the first example embodiment.

### <Variation 5>

In the above example embodiment, a case where a certificate (digital content) issued by a certificate issuer is stored in a digital wallet of the terminal 30 has been described. The certificate (digital content) may be issued and verified as an NFT (Non-Fungible Token) or a VC (Verifiable Credential) using blockchain. Specifically, the certificate issuer registers transaction information obtained by issuing an NFT or a VC in a blockchain, and the service provider verifies the reliability of the certificate using the transaction information recorded in the blockchain.

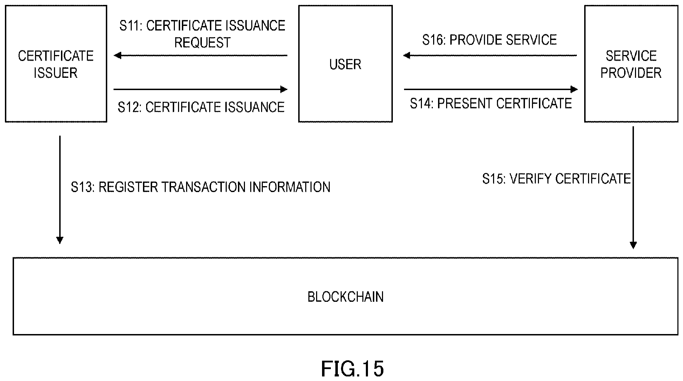

The terminal 30 of a user requests the issuance of a certificate from a certificate issuer (the server apparatus 10) (certificate issuing request; step S11 in Fig. 15).

The server apparatus 10 (certificate issuing unit 302) generates a signed certificate upon receiving a certificate issuing request from the terminal 30. The server apparatus 10 of the certificate issuer issues an NFT or a VC based on the generated signed certificate (certificate issuing; step S12).

In addition, the server apparatus 10 of the certificate issuer registers transaction information obtained by issuing the NFT or VC in a blockchain (step S13). The transaction information includes an issuer ID, a public key, or the like.

The terminal 30 (certificate acquisition control unit 212) stores the received certificate in a digital wallet. For example, the terminal 30 held by a student stores a VC or NFT of the student ID in the digital wallet after making a request to the university for issuance of the student ID. Transaction information related to the student ID (such as the issuing university ID and a public key) is stored in the blockchain.

The terminal 30 (usage control unit 213), in response to the user's selection of a certificate to be used, provides the selected certificate and biometric information of the holder of the digital wallet to the service provider. The terminal 30 provides the certificate and biometric information to the business operator terminal 20 of the service provider using a two-dimensional barcode, a short-range wireless communication means, or the like (certificate presentation; step S14).

The business operator terminal 20 of the service provider (service provision control unit 402) verifies the reliability of the received certificate using the transaction information recorded in the blockchain (certificate verification; step S15). The business operator terminal 20 verifies that the certificate has not been tampered with and that it has been issued by a trusted issuer, using the transaction information obtained from the blockchain. In addition, the business operator terminal 20 acquires biometric information by capturing the user in front.

The business operator terminal 20 performs authentication processing using the biometric information acquired from the terminal 30 and the biometric information acquired from the user in front. In a case where both the verification of certificate reliability and the personal authentication of the user succeed, the business operator terminal 20 provides the service to the user (service provision; step S16).

As described above, the terminal 30 according to the first example embodiment uses a reliable identity verification document issued by a public institution, such as a My Number Card, as a Root of Trust at the time of digital wallet setup. The terminal 30 performs identity verification using biometric information acquired from the identity verification document (Root of Trust) and biometric information of the person who sets up the digital wallet. The terminal 30 ensures, through the identity verification (authentication processing using two pieces of biometric information), that the person who sets up the digital wallet and the holder of the digital wallet are identical. With such a configuration, for example, another person cannot fraudulently open a digital wallet under the name of the holder (it is not possible to open a digital wallet using another person's identity verification document). In addition, the service provider verifies, using biometric authentication, that the user of the digital wallet and the holder of the digital wallet are identical. In a case where the user of the digital wallet and the holder of the digital wallet are not identical, the service provider does not trust the certificate provided from the digital wallet. That is, consistency between the service user and the holder of the digital wallet is ensured (authenticity regarding the consistency between the service user and the holder of the digital wallet is guaranteed). As described above, by executing authentication processing also on the service provider side, it is possible to prevent fraudulent use in which the user passes the terminal 30 to another person after activating the digital wallet and the other person uses a certificate in the digital wallet. In addition, after biometric authentication by the service provider, the certificate stored in the digital wallet is used for purposes such as applying for a student discount or attendance management.

In addition, the terminal 30 performs matching using the basic information acquired from the identity verification document and the basic information acquired from the certificate, in a case where the certificate is acquired from the certificate issuer. Through the matching, the terminal 30 verifies (confirms) that the issued certificate is not a certificate issued to a person other than the holder of the digital wallet. Since only a certificate that has successfully passed such verification is stored in the digital wallet, the authenticity of the digital wallet is ensured, and the authenticity of the digital content (certificate) provided from the digital wallet is also guaranteed.

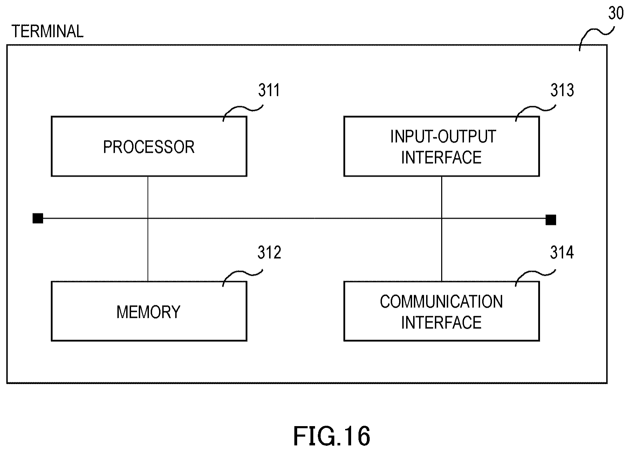

Next, a hardware configuration of an individual apparatus that constitutes the information processing system will be described. Fig. 16 is a diagram illustrating an example of a hardware configuration of the terminal 30.

The terminal 30 can be configured by an information processing apparatus (a so-called computer) and includes a configuration illustrated as an example in Fig. 16. For example, the terminal 30 includes a processor 311, a memory 312, an input-output interface 313, a communication interface 314, etc. The above-described components such as the processor 311 are connected via an internal bus or the like and are configured to be capable of communicating with each other.

However, the configuration shown in Fig. 16 is not intended to limit the hardware configuration of the terminal 30. The terminal 30 may include hardware not illustrated or may be configured without the input-output interface 313 if desired. In addition, the number of processors 311 or the like included in the terminal 30 is not intended to be limited to the example shown in Fig. 16, and for example, a plurality of processors 311 may be included in the terminal 30.

For example, the processor 311 is a programmable device such as a CPU (Central Processing Unit), an MPU (Micro Processing Unit), or a DSP (Digital Signal Processor). Alternatively, the processor 311 may be a device such as an FPGA (Field Programmable Gate Array) or an ASIC (Application Specific Integrated Circuit). The processor 311 executes various kinds of programs including an operating system (OS).

The memory 312 is a RAM (Random Access Memory), a ROM (Read-Only Memory), an HDD (Hard Disk Drive), an SSD (Solid State Drive), or the like. The memory 312 stores an OS program, an application program, and various kinds of data.

The input-output interface 313 is an interface for a display apparatus or an input apparatus, which are not illustrated. The display apparatus is, for example, a liquid crystal display or the like. For example, the input apparatus is an apparatus that receives user operations, and examples of the input apparatus include a keyboard and a mouse.

The communication interface 314 is a circuit, a module, or the like for performing communication with other apparatuses. For example, the communication interface 314 includes a NIC (Network Interface Card) or the like.

The function of the terminal 30 is realized by various kinds of processing modules. The processing modules are realized, for example, by causing the processor 311 to execute a program stored in the memory 312. In addition, this program can be recorded in a computer-readable storage medium. The storage medium may be a non-transient (non-transitory) storage medium, such as a semiconductor memory, a hard disk, a magnetic recording medium, or an optical recording medium. That is, the present invention can be embodied as a computer program product. In addition, the above program may be updated by downloading a program via a network or by using a storage medium in which a program is stored. In addition, the above processing modules may be realized by semiconductor chips.

It should be noted that the server apparatus 10 and the business operator terminal 20 can also be configured by an information processing apparatus in the same manner as the terminal 30, and their basic hardware configurations are not different from that of the terminal 30, so detailed description thereof will be omitted.

The terminal 30, which is an information processing apparatus, includes a computer and can realize the functions of the terminal 30 by causing the computer to execute a program. In addition, the terminal 30 executes a control method of the terminal 30 by using this program. Similarly, the server apparatus 10 includes a computer, and the functions of the server apparatus 10 can be realized by causing the computer to execute a program. In addition, the server apparatus 10 executes a control method of the server apparatus 10 by using this program.

### [Variations]

The configurations, operations, and so on of the information processing system according to the above example embodiments are examples and do not limit the present system configuration, and so on.

In performing matching between the basic information acquired from the identity verification document (for example, name, gender, date of birth, address) and the basic information acquired from the certificate, the terminal 30 may take into account notational variations in each item constituting the basic information. For example, the terminal 30 may calculate a degree of consistency between the two pieces of basic information as a matching score, taking into account notational variations in the name or address. For example, the terminal 30 may acquire a degree of consistency between the two pieces of basic information using a learning model obtained by machine learning. The terminal 30 may perform threshold processing on the acquired degree of consistency (matching score), and discard the acquired certificate in a case where the matching score is equal to or less than a predetermined value.

In the above example embodiment, a case has been described in which identity verification (confirmation of consistency between the holder of the identity verification document and the person who sets up the digital wallet) is performed using biometric information acquired from the identity verification document. However, the identity verification may also be performed using an electronic certificate stored in the identity verification document. Specifically, the terminal 30 acquires digital certificates (a Digital Certificate for Electronic Signature, a Digital Certificate for User Identification) from the My Number Card possessed by the user. The terminal 30 transmits the acquired digital certificate to a certification authority (J-LIS; Japan Agency for Local Authority Information Systems) and requests the certification authority to verify the validity of the digital certificate. The terminal 30 determines that identity verification has succeeded in a case where the digital certificate is valid.

The terminal 30 may set a validity period for the digital wallet at the time of setting up the digital wallet. The terminal 30 may set the validity period of the digital wallet in accordance with the identity verification document used for identity verification or the validity period of the identity verification document. For example, in a case where a passport valid for five years is used for identity verification, the terminal 30 sets the validity period of the digital wallet to five years. Alternatively, in a case where a passport valid for ten years or a My Number Card valid for ten years is used for identity verification, the terminal 30 sets the validity period of the digital wallet to ten years. Alternatively, the terminal 30 may vary the validity period of the digital wallet depending on whether a passport or a My Number Card is used for identity verification. Alternatively, the terminal 30 may determine the validity period of the digital wallet based on the remaining validity period of the identity verification document, rather than the validity period at the time the identity verification document was issued. For example, in a case where an identity verification document with a remaining validity period of three years is used for identity verification, the terminal 30 sets the validity period of the digital wallet to three years. In a case where an identity verification document with a remaining validity period of five years is used for identity verification, the terminal 30 sets the validity period of the digital wallet to five years.

Alternatively, the terminal 30 may impose a limit on the number of times the digital wallet can be used. For example, in a case where the terminal 30 detects that the digital wallet has been activated a predetermined number of times or more within a predetermined period, it determines that the digital wallet is being fraudulently used by the user. In this case, the terminal 30 does not activate the digital wallet and prohibits the user from using the digital wallet.

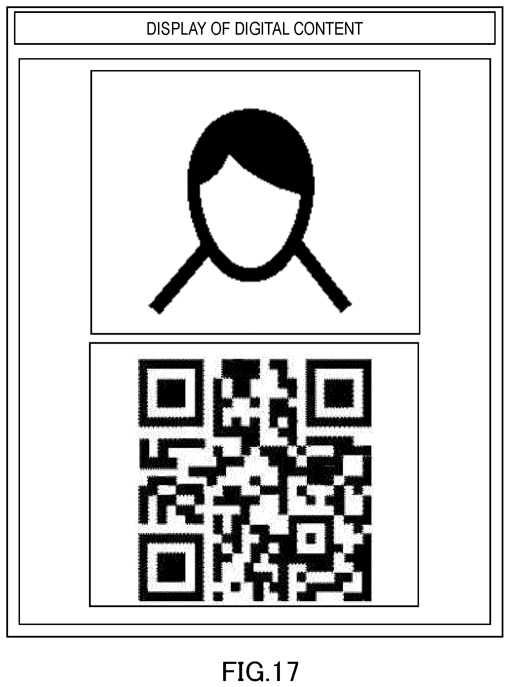

At the time of presenting the biometric information and certificate of the holder of the digital wallet to the service provider, the terminal 30 may present a portion of the information by means other than a two-dimensional barcode. For example, as shown in Fig. 17, the terminal 30 may display, on the same screen, a face image (biometric information) and a two-dimensional barcode in which a certificate or the like is encoded. Alternatively, the terminal 30 may display, on the same screen, a face image and a two-dimensional barcode in which the face image and the certificate are encoded. An employee of the service provider may perform identity verification of the user presenting the certificate by comparing the face of the user with the face image displayed on the terminal 30.

In Variation 1 of the first example embodiment, by taking as an illustrative example a case in which a student attends a class held at a university, a situation has been described in which biometric matching processing, which is necessary for the service provider to provide a service to the user, is executed on the terminal 30 possessed by the user. However, the above-mentioned matching processing may also be performed on the terminal 30 of the user in situations other than confirmation of attendance at university classes. That is, in the terminal 30 possessed by the user, in a case where matching processing between a face image acquired by image capturing and a face image of a pre-registered face is successfully completed, the terminal 30 issues (displays) a two-dimensional barcode including the information "face recognition has succeeded" and the information "corresponding certificate information". The business operator terminal 20 may read the issued two-dimensional barcode and acquire information necessary for performing identity verification and providing the service, such as a certificate. In this case, the business operator terminal 20 does not need to perform matching processing using a face image or to perform capturing of the user (acquisition of a face image). Accordingly, it is sufficient for the business operator terminal 20 to be equipped with a barcode reader, and it does not require a camera. It should be noted that, in order to prevent use by a user who is not the holder of the digital wallet, the terminal 30 may perform display as shown in Fig. 17 (displaying a two-dimensional barcode and a face image on the same screen). That is, by allowing an employee or the like of the service provider to perform identity verification by visual inspection, it becomes possible to prevent a fraudulent act in which, after identity verification is completed, the terminal 30 is handed over from the holder of the digital wallet to another person, and the terminal 30 is presented to the service provider by that other person.

It should also be noted that, in a case where matching processing of biometric information necessary for a service provider to provide a service to a user is executed on the terminal 30 possessed by the user, the terminal 30 may restrict the display of the two-dimensional barcode to a predetermined time period. For example, the terminal 30 may allow the two-dimensional barcode to be displayed only during a predetermined period after successful biometric authentication.

Some of the functions of the terminal 30 may be implemented in a different apparatus, device, or the like. More specifically, it is sufficient that the "identity verification unit (identity verification means)" and the "certificate acquisition control unit (certificate acquisition control means)" described above are implemented in any one of the apparatuses included in the system.

While the data exchange between each apparatus (for example, the server apparatus 10 and the terminal 30) is not limited to any particular mode, data exchanged between these apparatuses may be encrypted. It is desirable that personal information of a user, and so on are transmitted and received between these apparatuses and encrypted data is transmitted and received in order to properly protect this information.

In the flowcharts and sequence diagrams used in the above description, a plurality of steps (processes) are sequentially described. However, the order of the execution of the steps performed in the individual example embodiment is not limited to the described order. In the individual example embodiment, the order of the illustrated steps may be changed to the extent that a problem is not caused on the content of the individual example embodiment. For example, individual processes may be executed in parallel.

The above example embodiments have been described in detail to facilitate the understanding of the present application disclosed and not to mean that all the configurations described above are needed. In addition, if a plurality of example embodiments have been described, each of the example embodiments may be used individually or a plurality of example embodiments may be used in combination. For example, part of a configuration according to one example embodiment may be replaced by a configuration according to another example embodiment. For example, a configuration according to one example embodiment may be added to a configuration according to another example embodiment. In addition, addition, deletion, or replacement is possible between part of a configuration according to one example embodiment and another configuration.

The industrial applicability of the present invention has been made apparent by the above description. That is, the present invention is suitably applicable, for example, to an information processing system or the like that include service providers who provide services to users using certificates stored in a digital wallet.

A part or the entirety of the example embodiments described above may be described as in the following supplementary notes, but is not limited to the followings.

### [Supplementary Note 1]

A terminal including:
an identity verification means that performs identity verification of an opener of a digital wallet using biometric information acquired from an identity verification document and biometric information of the opener of the digital wallet; and
a storage means that stores, in a case of successful identity verification, the biometric information acquired from the identity verification document or the biometric information of the opener of the digital wallet as biometric information of the holder of the digital wallet.

### [Supplementary Note 2]

The terminal according to supplementary note 1, wherein the identity verification means determines that the identity verification is successful in a case where first authentication processing using the biometric information acquired from the identity verification document and the biometric information of the opener the digital wallet is successful.

### [Supplementary Note 3]

The terminal according to supplementary note 2, further including a certificate acquisition control means that receives a certificate from a certificate issuer by requesting issuance of the certificate to the certificate issuer, and stores, in a case where basic information, the basic information being acquired from the identity verification document, related to a holder of the identity verification document and basic information, the basic information being acquired from the received certificate, related to the holder of the certificate match, the received certificate in the digital wallet.

### [Supplementary Note 4]

The terminal according to supplementary note 3, further including a usage control means that provides the stored certificate in the digital wallet and the stored biometric information of the holder of the digital wallet to a service provider in a case where a user receives a service from the service provider.

### [Supplementary Note 5]

The terminal according to supplementary note 3, further including a usage control means that performs, in a case where a user receives a service from the service provider, second authentication processing using the biometric information of the holder of the digital wallet and the biometric information of the user, and uses the stored certificate in the digital wallet in a case where the second authentication processing is successful.

### [Supplementary Note 6]

The terminal according to supplementary note 5, wherein the usage control means performs the second authentication processing in a case where a beacon is received from a beacon transmitting apparatus installed in a classroom of an educational institution, and determines, in a case where the second authentication processing succeeds, whether or not the user is qualified to take a class conducted in the classroom based on a student ID stored in the digital wallet.

### [Supplementary Note 7]

The terminal according to any one of supplementary notes 1 to 6, wherein the identity verification document is a My Number card or a passport.

### [Supplementary Note 8]

The terminal according to supplementary note 7, wherein the biometric information is a face image or a feature value generated from the face image.

### [Supplementary Note 9]

A system including:
a terminal; and
a business operator terminal used in a case where a service provider provides a service to a user, and
wherein the terminal includes:
   an identity verification means that performs identity verification of an opener of a digital wallet using biometric information acquired from an identity verification document and biometric information of the opener of the digital wallet;
   a storage means that stores, in a case of successful identity verification, the biometric information acquired from the identity verification document or the biometric information of the opener of the digital wallet as biometric information of the holder of the digital wallet; and
   a usage control means that provides digital content stored in the digital wallet and the biometric information of the holder of the digital wallet to the business operator terminal.

### [Supplementary Note 10]

A control method of a terminal, the control method including: performing identity verification of an opener of a digital wallet using biometric information acquired from an identity verification document and biometric information of the opener of the digital wallet; and storing, in a case of successful identity verification, the biometric information acquired from the identity verification document or the biometric information of the opener of the digital wallet as biometric information of the holder of the digital wallet.

### [Supplementary Note 11]

A computer-readable storage medium storing a program causing a computer mounted on a terminal to perform processing for:
performing identity verification of an opener of a digital wallet using biometric information acquired from an identity verification document and biometric information of the opener of the digital wallet; and storing, in a case of successful identity verification, the biometric information acquired from the identity verification document or the biometric information of the opener of the digital wallet as biometric information of the holder of the digital wallet.

It should be noted that the entire disclosure of the above patent literature is incorporated herein by reference thereto. While the example embodiments of the present invention have thus been described, the present invention is not limited to these example embodiments. It is to be understood to those skilled in the art that these example embodiments are only examples and that various variations are possible without departing from the scope and spirit of the present invention. That is, the present invention of course includes various variations and modifications that could be made by those skilled in the art in accordance with the overall disclosure including the claims and the technical concept.

### [Reference Signs List]

10 server apparatus
20 business operator terminal
30 terminal
100 terminal
101 identity verification means
102 storage means
201 communication control unit
202 digital wallet control unit
203 storage unit
211 identity verification unit
212 certificate acquisition control unit
213 usage control unit
301 communication control unit
302 certificate issuing unit
303 storage unit
311 processor
312 memory
313 input-output interface
314 communication interface
401 communication control unit
402 service provision control unit
403 storage unit

## Claims

1. A terminal comprising:
an identity verification means that performs identity verification of an opener of a digital wallet using biometric information acquired from an identity verification document and biometric information of the opener of the digital wallet; and
a storage means that stores, in a case of successful identity verification, the biometric information acquired from the identity verification document or the biometric information of the opener of the digital wallet as biometric information of the holder of the digital wallet.

2. The terminal according to claim 1, wherein the identity verification means determines that the identity verification is successful in a case where first authentication processing using the biometric information acquired from the identity verification document and the biometric information of the opener the digital wallet is successful.

3. The terminal according to claim 2, further comprising a certificate acquisition control means that receives a certificate from a certificate issuer by requesting issuance of the certificate to the certificate issuer, and stores, in a case where basic information, the basic information being acquired from the identity verification document, related to a holder of the identity verification document and basic information, the basic information being acquired from the received certificate, related to the holder of the certificate match, the received certificate in the digital wallet.

4. The terminal according to claim 3, further comprising a usage control means that provides the stored certificate in the digital wallet and the stored biometric information of the holder of the digital wallet to a service provider in a case where a user receives a service from the service provider.

5. The terminal according to claim 3, further comprising a usage control means that performs, in a case where a user receives a service from the service provider, second authentication processing using the biometric information of the holder of the digital wallet and the biometric information of the user, and uses the stored certificate in the digital wallet in a case where the second authentication processing is successful.

6. The terminal according to claim 5, wherein the usage control means performs the second authentication processing in a case where a beacon is received from a beacon transmitting apparatus installed in a classroom of an educational institution, and determines, in a case where the second authentication processing succeeds, whether or not the user is qualified to take a class conducted in the classroom based on a student ID stored in the digital wallet.

7. The terminal according to any one of claims 1 to 6, wherein the identity verification document is a My Number card or a passport.

8. The terminal according to claim 7, wherein the biometric information is a face image or a feature value generated from the face image.

9. A system comprising:
a terminal; and
a business operator terminal used in a case where a service provider provides a service to a user, and
wherein the terminal comprises:
an identity verification means that performs identity verification of an opener of a digital wallet using biometric information acquired from an identity verification document and biometric information of the opener of the digital wallet;
a storage means that stores, in a case of successful identity verification, the biometric information acquired from the identity verification document or the biometric information of the opener of the digital wallet as biometric information of the holder of the digital wallet; and
a usage control means that provides digital content stored in the digital wallet and the biometric information of the holder of the digital wallet to the business operator terminal.

10. A control method of a terminal, the control method comprising:
performing identity verification of an opener of a digital wallet using biometric information acquired from an identity verification document and biometric information of the opener of the digital wallet; and
storing, in a case of successful identity verification, the biometric information acquired from the identity verification document or the biometric information of the opener of the digital wallet as biometric information of the holder of the digital wallet.

11. A computer-readable storage medium storing a program causing a computer mounted on a terminal to perform processing for:
performing identity verification of an opener of a digital wallet using biometric information acquired from an identity verification document and biometric information of the opener of the digital wallet; and
storing, in a case of successful identity verification, the biometric information acquired from the identity verification document or the biometric information of the opener of the digital wallet as biometric information of the holder of the digital wallet.
